# EUROPEAN PATENT APPLICATION

(11) **EP 4 850 823 A1**
(43) Date of publication of application: **09.12.2026**
(21) Application number: 25181344.0
(22) Date of filing: 06.06.2025
(51) Int. Cl.: B05C 17/005, G01N 21/64

(54) **PRODUCT COMPRISING A HOT-MELT ADHESIVE AND A DEVICE FOR MELTING AND DISPENSING THE HOT-MELT ADHESIVE**

(71) Applicant: Henkel AG & Co. KGaA, 40589 Düsseldorf (DE)
(72) Inventor: Tierney, Fergal, Celbridge, Co. Kildare, W23 HX36 (IE); Schaefer, Matthias, 40822 Düsseldorf (DE); Poot-Niekamp, Hildegard, 52525 Waldfeucht (DE); Schwarz, Lynn, 41464 Neuss (DE); Kelly, Ruth, Clonee, 15 Dublin (IE)

(57) **Abstract**

The invention relates to a product (100) comprising a hot-melt adhesive (24) and a device (1) for melting the hot-melt adhesive (24) and for dispensing the hot-melt adhesive (24) in a melted state, the device comprising a handle part (2) and a nozzle head (3), the nozzle head (3) comprising a heating element (6) for melting the hot-melt adhesive and an outlet nozzle (7) for dispensing the hot-melt adhesive in the molten state from the device (1). The invention is characterized in that a) the device (1) comprises a sensor unit (14) which has a UV radiation source (26) and a sensor (25); and b) the hot-melt adhesive (24) contains at least one fluorescent substance which emits a specific radiation when irradiated by the UV radiation source (26), wherein the sensor (25) is suitable for detecting the specific radiation, and wherein the control unit (14) is suitable for assigning a specific hot-melt adhesive to the detected specific radiation. Furthermore, the invention relates to the device (1) and the hot-melt adhesive (24)

## Description

The invention relates to a product with a hot-melt adhesive and a device with which the hot-melt adhesive can be melted and dispensed in a molten state. The invention also relates to the hot-melt adhesive and the device.

Such a device is known as a hot glue gun, both for hobby applications and in the professional craft sector. The device comprises a handle part, which can be held with one hand, and a nozzle head. The nozzle head has a heating element for melting the hot-melt adhesive and an outlet nozzle from which the melted hot-melt adhesive emerges. The hot-melt adhesive to be melted is usually introduced into the pistol-shaped device in the form of adhesive rods and transported through the device in the direction of the nozzle head with the aid of a feed mechanism.

In principle, different types of hot-melt adhesives can be processed with such a device, for example ethylene-vinyl acetate copolymers (EVA), polyolefins (PO), polyamides (PA) and others. Depending on the substrate to which the hot-melt adhesive is to be applied and/or the required strength of the bond, a user selects a suitable hot-melt adhesive. However, the individual hot-melt adhesives generally differ in their processing properties, particularly with regard to their melting temperatures, so that for optimum processability it is necessary to set a heating temperature in the heating element to the individual melting temperature of the hot-melt adhesive selected in each case.

Such adjustability of the heating temperature is not even provided for in many simple hot glue guns. DE 10 2017 105 157 A1 discloses a hot-melt glue gun that allows manual adjustment by the user, whereby only two different temperature settings can be selected. In principle, the possibility of manual adjustment presupposes that the user knows the ideal heating temperature for the respective hot-melt adhesive, which cannot be assumed, especially in hobby applications. Incorrect adjustment of the heating temperature can also have a negative effect on the viscosity and therefore on the workability of the melted adhesive.

The present invention has therefore set itself the task of providing a product comprising a hot-melt adhesive and a device for melting and dispensing the hot-melt adhesive, so that the hot-melt adhesive can be processed under ideal conditions.

This problem is solved by a product with the features of claim 1. Embodiments can be found in the subclaims to claim 1.

According to the invention, it is provided that the device comprises a sensor unit which has a UV radiation source and a sensor. The hot-melt adhesive has at least one fluorescent substance which emits specific radiation when irradiated by the UV radiation source. The sensor is suitable for detecting the specific radiation of the fluorescent substance. In addition, the sensor unit is suitable for assigning a specific hot-melt adhesive to the specific radiation detected.

The specific radiation can have a spectrum with wavelengths in the range from 400 to 780 nm. As the wavelength range from 400 nm to 780 nm represents visible light, the sensor can be designed as an optical sensor.

In one embodiment, a maximum of the spectrum of the specific radiation of the fluorescent substance is in a wavelength range from 400 to 500 nm, preferably between 425 and 450 nm. Accordingly, the fluorescent substance emits blue light during UV irradiation. The sensor can detect this blue light accordingly. The sensor unit can then assign a specific hot-melt adhesive to this blue light. A corresponding assignment must be stored in the sensor unit.

The invention can therefore be used for automatic detection and differentiation of different hot-melt adhesives. Depending on the hot-melt adhesive detected by the sensor unit, certain settings of the device can be automatically adjusted, which will be explained in more detail below. In this way, it is possible to provide each hot-melt adhesive as it emerges from the outlet nozzle in the way required for optimum processability. The error-prone manual adjustment of individual parameters, such as the heating temperature of the heating element, by a user can be omitted, as such settings can be made automatically and in an optimized manner within the device in response to an output signal from the sensor unit.

By using different substances in different hot-melt adhesives, these can be distinguished from one another according to the invention. In one embodiment example, different mass fractions of the fluorescent substance are alternatively or additionally used as a distinguishing criterion.

The invention makes it possible to distinguish hot-melt adhesives from one another, even though these hot-melt adhesives cannot be distinguished in normal light. This opens up the possibility of using different hot-melt adhesives for different applications without having to take into account the color or coloration of the hot-melt adhesive.

The substance can be a high-molecular optical brightener/fluorescence brightener from the class of thiophenediylbenzoxazoles. In one embodiment, the substance used is the UV brightener Tinopal OB CO from BASF. The substance can be a liquid or a solid (for example a powder).

The mass fraction of the substance in relation to the total mass of the hot-melt adhesive can be in a range of 25 to 300, preferably 25 to 75 mg/kg. It has been shown that these comparatively low mass fractions are already sufficient for a sufficiently large and detectable reaction during UV irradiation.

The hot-melt adhesive can be in the form of a rod. The rod can have a diameter of 8 to 18 mm. The length of a rod can be 15 to 25 cm.

In an embodiment of the invention the sensor unit is arranged on a main circuit board of the device. In this way, existing power supply and switching structures can be used and no additional installation space needs to be provided for the sensor unit. Preferably, the sensor unit is arranged on the main circuit board in the area of the handle part of the device.

An output signal of the sensor unit can be fed to a control unit for controlling at least one setting of the device. In other words, the output signal of the sensor unit, which contains information about the type of hot-melt adhesive present in the device, can be used to control one or more parameters of the device.

In particular, the output signal from the sensor unit can be used to control the heating temperature of the heating element. For this purpose, the output signal of the sensor unit can be fed to a control unit of the heating element via at least one control line. In this way, it is possible to control the heating element as a function of the detected hot-melt adhesive and to heat it to a temperature that corresponds to the individual melting temperature of this hot-melt adhesive. This is particularly advantageous with regard to the efficient use of energy and also means that each hot-melt adhesive can be dispensed from the device as required, for example with regard to its viscosity, for optimum processability.

According to one embodiment of the invention, the nozzle head can be detachably connected to the handle part. The detachable connection of the nozzle head and the handle part makes it possible for a nozzle head to be separated from the handle part together with a residue of a specific hot-melt adhesive remaining in it. Subsequently, another nozzle head can be connected to the handle part, which is assigned to a different type of adhesive, and hot-melt adhesive of this type can now be processed with the device.

The nozzle head can be connected to the handle part by means of a bayonet lock via a plug-in rotary movement. The use of a bayonet lock allows the nozzle head and handle part to be connected and disconnected with a single movement, in particular it is not necessary to change grip during assembly or disassembly. A user grips the handle part with one hand and the nozzle head with the other and can connect and disconnect the two components with a single twisting movement. In this way, the risk of coming into contact with the hot outlet nozzle during assembly or disassembly can be significantly reduced.

The bayonet lock can be designed in such a way that the rotary movement between the handle part and the nozzle head required to actuate the bayonet lock only extends over a particularly small angle of rotation of a maximum of 30°. Due to the small angle of rotation, the dwell time on the components is particularly short for a user, which further minimizes the risk of coming into contact with the hot outlet nozzle.

The bayonet lock can, for example, have projections formed on the nozzle head, which can be inserted into notches formed on the handle part, whereby the nozzle head and the handle part can be locked together by a rotary movement of the nozzle head relative to the handle part. The projections inserted into the notches can engage behind material webs formed on the handle part, which laterally delimit the receptacles.

According to one embodiment of the invention, the nozzle head comprises a housing which is designed to be thermally insulating. In particular in the case of a nozzle head which can be detachably connected to the handle part, a user can also conveniently grip the nozzle head immediately after using the device and separate it from the handle part without having to fear burns. A nozzle head removed from the device can be deposited in such a way that it rests on the heat-insulating housing and can cool down without the hot outlet nozzle coming into contact with a surface or the like.

It may be provided that the housing has surface irregularities on its outer side, for example in the form of ribs and/or knobs, which facilitates gripping and twisting of the nozzle head and can prevent slipping.

A further task of the invention, the provision of a device for the product described above, is solved by the combination of features according to claim 11. The device according to the invention can be used in the different embodiments of the product described above.

In addition, a further task of the invention is to provide a hot-melt adhesive which makes it possible to easily distinguish between different types of hot-melt adhesives, preferably in conjunction with the device according to the invention. This task is solved by claim 13. Embodiments can be found in claims 14 and 15.

In the following, the invention is explained in more detail with reference to an embodiment example and with reference to the accompanying drawings. It is shown in:
- Figure 1:: a side view of a product with a device and a hot-melt adhesive;
- Figure 2:: a side sectional view of the device shown in Figure 1;
- Figure 3:: a nozzle head of the device from Figure 1 in an oblique side view;
- Figure 4:: the nozzle head from Figure 3 viewed from the front;
- Figure 5:: the nozzle head from Figure 3 viewed from the rear;
- Figure 6:: an oblique side view of a handle part of the device shown in Figure 1;
- Figure 7:: enlarged view of a connection area of the handle part from Figure 6;
- Figure 8:: the connection area of the handle part from Figure 6 in a plan view from the front; and
- Figure 9: schematically a sensor unit with an UV radiation source and a sensor.

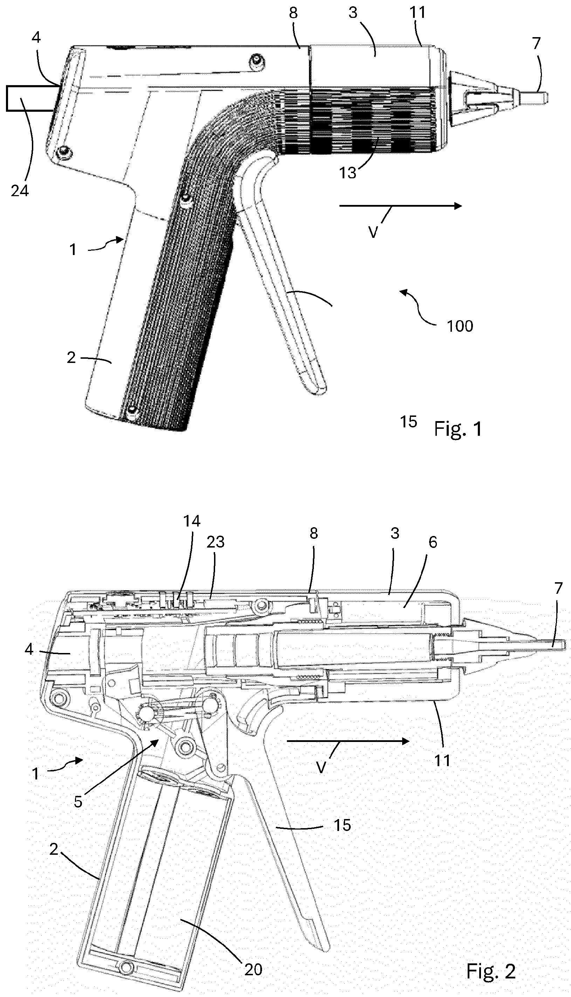

Figure 1 shows a product, which in its entirety is designated 100. The product 100 comprises a hot-melt adhesive 24 and a device 1 for melting and dispensing the hot-melt adhesive 24. The device 1 comprises a handle part 2 and a nozzle head 3 that can be detachably connected to the handle part 2 in a connection area 8 (see also Figure 2). The handle part 2 allows the device 1 to be held with one hand.

The handle part 2 comprises an inlet 4 for supplying the hot-melt adhesive 24. The hot-melt adhesive 24 is shown in Figure 1 in the form of an adhesive rod, whereby only one end of the adhesive rod protruding from the device 1 can be seen. The adhesive rod, which may have a circular cross-section, is largely located in the device 1 (the hot-melt adhesive is not shown in Figure 2). The hot-melt adhesive 24 comprises a fluorescent substance which, when irradiated with UV radiation of preferably 300 nm to 400 nm, emits radiation with a wavelength in the visible light spectrum (400 nm to 780 nm).

The adhesive rod 24 is transported through the device 1 in a feed direction marked V. For this purpose, the handle part 2 comprises a feed mechanism 5, which can be seen in its entirety in Figure 2 and of which only a trigger 15 that can be actuated by a user can be seen in Figure 1.

The nozzle head 3 comprises a housing 11 and a heating element 6, which is arranged inside the housing 11 and can be seen in Figure 2, for melting the hot-melt adhesive. The melted hot-melt adhesive can exit the device 1 through an outlet nozzle 7 formed on the nozzle head 3. The housing 11 is thermally insulating so that a user can safely touch the nozzle head 3 immediately after using the device 1.

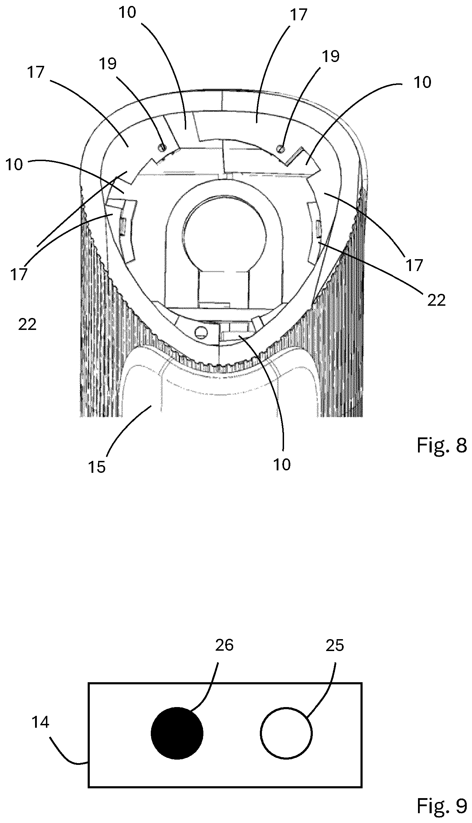

A sensor unit 14 is arranged in the handle part 2, see Figure 2, which is designed to detect different types of hot-melt adhesive to be melted. The sensor unit 14, which is also shown schematically in Figure 9, comprises an optical sensor 25 and a UV radiation source 26 for this purpose. The sensor 25 is able to detect the emission of the fluorescent substance caused by the UV radiation. Based on detected emission, the sensor unit 14 can conclude the type of hot-melt adhesive. For this purpose, the sensor unit 14 is arranged and aligned on the main circuit board 23 of the device 1 in such a way that a hot-melt adhesive rod moving underneath the main circuit board 23 through the device 1 is automatically guided through the field of view of the sensor 25 and irradiated by the UV radiation source 26.

Different hot-melt adhesive formulations, for example based on EVA, PO or PA, can already be mixed with different fluorescent substances by the manufacturer for the purpose of differentiation. The different emissions of the fluorescent substances can be detected automatically with the aid of the sensor 25 arranged in the device 1, from which conclusions can be drawn about the respective hot-melt adhesive formulation. Preferably, the different hot-melt adhesives do not differ from each other in normal light. The final use of the respective hot-melt adhesive is therefore not restricted by a particular color or coloring.

Depending on the hot-melt adhesive detected by the sensor unit 14, certain settings of the device 1 can be automatically adjusted by feeding the output signal of the sensor unit 14 to a control unit for controlling at least one setting of the device 1. In the embodiment example shown in the figures, the output signal of the sensor unit 14 can be fed via at least one control line to a control unit of the heating element 6 arranged in the nozzle head 3. In this way, it is possible to control the heating element 6 as a function of the detected hot-melt adhesive and to heat it to a temperature that corresponds to the individual melting temperature of this hot-melt adhesive. In this way, the hot-melt adhesive can be provided as it emerges from the outlet nozzle 7 in such a way that it can be optimally processed, for example with regard to its viscosity. Any manual adjustment of the heating temperature of the heating element 6 by a user can be omitted, since the corresponding setting is made automatically and in an optimized manner within the device in response to the output signal of the sensor unit 14. A user can therefore assume, even without knowledge of the special hot-melt adhesive formulation and without having to make settings on the device 1 himself, that a hot-melt adhesive supplied to the device 1 via the inlet 4 is provided at the outlet from the outlet nozzle 7 in the manner required for its optimum processability. This leads to simplified handling and better adhesive results.

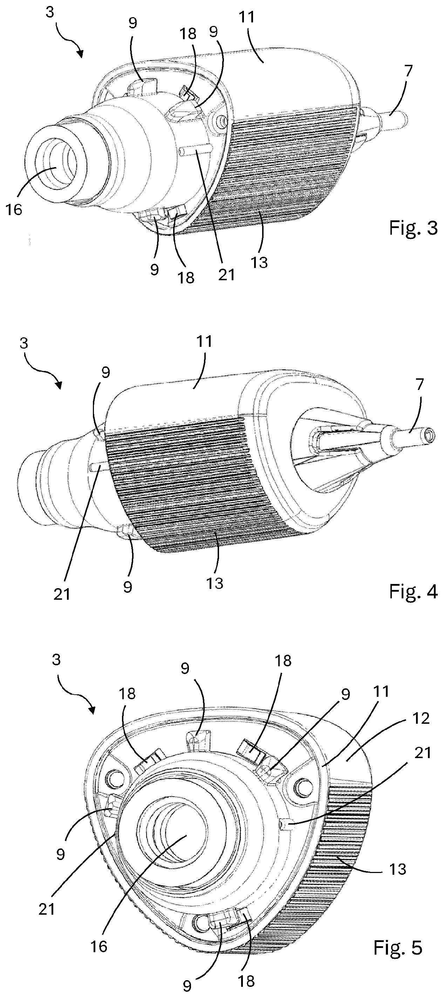

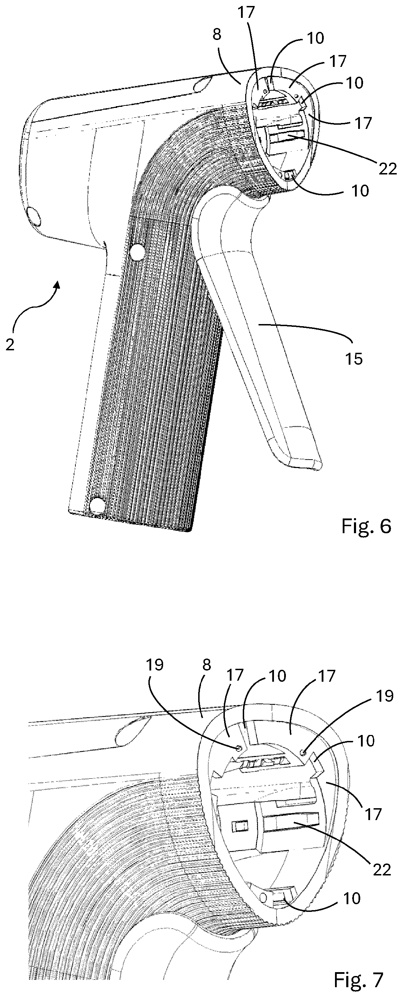

As already mentioned in connection with Figures 1 and 2, the nozzle head 3 of the device 1 is detachably connected to the handle part 2. Figures 3 to 5 show different views of the nozzle head 3 of the device 1, which is separate from the handle part 2. The nozzle head 3 has a central channel 16 running through it, through which the hot-melt adhesive 24 is transported and which opens into the outlet nozzle 7. The handle part 2 is shown in detail in Figures 6 to 8.

The nozzle head 3 and the handle part 2 can be connected to each other by a bayonet lock. For this purpose, several projections 9 are formed on the nozzle head 3 in the illustrated design example, which can be inserted into corresponding notches 10 on the handle part 2. A subsequent rotary movement of the nozzle head 3 relative to the handle part 2 allows the nozzle head 3 and the handle part 2 to be locked together. The projections 9 inserted into the notches 10 engage behind material webs 17 formed in the connection area 8, which laterally delimit the receptacles 10.

The bayonet lock is characterized by the fact that a relative rotation of these two components by a very small angle of rotation of only about 20° is required to connect and disconnect nozzle head 3 and handle part 2. The use of a bayonet lock of this type therefore allows the nozzle head 3 and handle part 2 to be connected and disconnected with a single short movement. In particular, it is not necessary for a user to change her/his grip during assembly and/or disassembly. This significantly minimizes the risk of accidentally coming into contact with the hot outlet nozzle 7. Changing and replacing nozzle heads 3, for example depending on the adhesive to be processed, is thus possible for a user with minimal manual intervention and therefore significantly easier and, in particular, less dangerous than with known devices

To prevent slipping when replacing the nozzle head 3, rib-shaped surface irregularities 13 are formed on the outside 12 of the housing 11 of the nozzle head 3.

Adjacent to the projections 9, electrical spring contacts 18 are arranged on the nozzle head 3, which interact with contacts 19 formed in the connection area 8 on the handle part 2 and which serve to supply power to the heating element 6 arranged in the nozzle head 3. For this purpose, rechargeable batteries 20 can be inserted into the handle part 2, see Figure 2, to which corresponding power supply lines are connected.

As already explained above, an output signal from the sensor unit 14 can be fed to a control system of the heating element 6 via control lines not shown in full in the figures, so that the heating temperature in the heating element 6 can be individually adapted to the respective type of hot-melt adhesive. In figures 3 to 8, only a part of these control lines is shown in the area of the connection between nozzle head 3 and handle part 2 in the form of two electrical connection pins 21 arranged on the nozzle head 3 and spring contacts 22 interacting with these and formed in the connection area 8 of the handle part 2.

### List of reference symbols

- 1: device
- 2: handle part
- 3: nozzle head
- 4: inlet
- 5: feed mechanism
- 6: heating element
- 7: outlet nozzle
- 8: connection region
- 9: protrusion
- 10: notch
- 11: housing
- 12: outside
- 13: surface irregularity
- 14: sensor unit
- 15: trigger
- 16: channel
- 17: material web
- 18: spring contact
- 19: contact
- 20: battery
- 21: connecting pin
- 22: spring contact
- 23: main board
- 24: hot-melt adhesive
- 25: sensor
- 26: UV radiation source
- 100: product

## Claims

1. Product (100) comprising a hot-melt adhesive (24) and a device (1) for melting the hot-melt adhesive (24) and for dispensing the hot-melt adhesive (24) in a molten state, the device comprising a handle part (2) and a nozzle head (3), the nozzle head (3) comprising a heating element (6) for melting the hot-melt adhesive and an outlet nozzle (7) for dispensing the hot-melt adhesive in the molten state from the device (1), **characterized in that**
a. the device (1) comprises a sensor unit (14) having a UV radiation source (26) and a sensor (25); and
b. the hot-melt adhesive (24) contains at least one fluorescent substance which emits a specific radiation when irradiated by the UV radiation source (26),
wherein the sensor (25) is suitable for detecting the specific radiation, and wherein the sensor unit (14) is suitable for assigning a specific hot-melt adhesive to the detected specific radiation.

2. Product (100) according to claim 1, **characterized in that** the specific radiation has a spectrum with a maximum that falls within a wavelength range of 400 to 780 nm.

3. Product (100) according to claim 1 or 2, **characterized in that** the substance is a high molecular weight optical brightener/fluorescence brightener from the class of thiophenediylbenzoxazoles.

4. Product (100) according to any one of claims 1 to 3, **characterized in that** a mass fraction of the substance relative to the total mass of the hot-melt adhesive (24) is in a range from 25 to 300, preferably 25 to 75 mg/kg

5. Product (100) according to any one of claims 1 to 4, **characterized in that** the hot-melt adhesive (24) has the shape of a rod.

6. Product (100) according to any one of claims 1 to 5, **characterized in that** the sensor unit (14) is arranged on a main board (23) of the device (1).

7. Product (100) according to one of claims 1 to 6, **characterized in that** an output signal of the sensor unit (14) can be fed via at least one control line to a controller of the heating element (6) for controlling a heating temperature of the heating element (6).

8. Product (100) according to one of claims 1 to 6, **characterized in that** the nozzle head (3) can be detachably connected to the handle part (2).

9. Product (100) according to claim 7, **characterized in that** the nozzle head (3) can be connected to the handle part (2) by means of a bayonet lock via a plug-in rotary movement, the rotary movement between the handle part (2) and the nozzle head (3) required to actuate the bayonet lock extending over a maximum angle of rotation of 30°.

10. Product (100) according to one of claims 1 to 9, **characterized in that** the nozzle head (3) comprises a housing (11) which is designed to be thermally insulating.

11. Device (1) for melting a hot-melt adhesive and for dispensing the hot-melt adhesive in a molten state, the device comprising a handle part (2) and a nozzle head (3), the nozzle head (3) comprising a heating element (6) for melting the hot-melt adhesive and an outlet nozzle (7) for discharging the hot-melt adhesive in the molten state from the device (1), **characterized in that** the device (1) comprises a sensor unit (14) which has a UV radiation source (26) and a sensor (25) which is suitable for detecting a specific radiation of the hot-melt adhesive caused by the UV radiation source.

12. The device (1) according to claim 11 for a product (100) according to any one of claims 1 to 10

13. A hot-melt adhesive (24) which can be melted with a device according to claims 11 or 12 and can be dispensed in the molten state, **characterized in that** the hot-melt adhesive contains a fluorescent substance which emits a specific radiation when irradiated by a UV radiation source.

14. The hot-melt adhesive (24) according to claim 13, **characterized in that** the specific radiation has a wavelength in the visible light spectrum.

15. The hot-melt adhesive (24) according to claim 13 or 14 for a product (100) according to any one of claims 1 to 10.
